# EUROPÄISCHE PATENTSCHRIFT

(11) **EP 1 236 566 B1**
(45) Veröffentlichungstag und Bekanntmachung des Hinweises auf die Patenterteilung: **19.11.2003**
(21) Anmeldenummer: 02003979.8
(22) Anmeldetag: 22.02.2002
(51) Int. Cl.: B32B 13/14

(54) **Wasserabweisender und dampfdurchlässiger Mehrschicht-Werkstoff für Aussenanwendungen**
Water-repellent and vapour permeable multilayer composite sheet for exterior use
Laminé résistant à l'eau et permeable à la vapeur

(30) Priorität: 26.02.2001 DE 10109264
(43) Veröffentlichungstag der Anmeldung: 04.09.2002
(73) Patentinhaber: Fraunhofer Gesellschaft zur Förderung der angewandten Forschung e.V., 80686 München (DE)
(72) Erfinder: Neumann, Gert, 13127 Berlin (DE); Raether, Friedrich, 97204 Höchberg (DE); Böse, Holger, 97080 Würzburg (DE); Löschke, Peter, 74427 Fichtenberg (DE); Thole, Volker, 38102 Braunschweig (DE); Herlyn, Johann W., 38108 Braunschweig (DE); Sattler, Heinz, 38108 Braunschweig (DE)

(56) Entgegenhaltungen:
- US-A- 4 647 496
- US-A- 4 879 173
- US-A- 4 882 888
- US-A- 5 397 631

## Beschreibung

Die vorliegende Erfindung betrifft einen mehrschichtigen, vorzugsweise plattenförmigen Werkstoff mit einem Gipskem für Außenanwendungen, der mindestens einseitig derartig beschichtet ist, daß er wenigstens auf dieser Seite wasserabweisende Eigenschaften aufweist, dabei aber dampfdurchlässig bleibt. Der Werkstoff eignet sich für den Außeneinsatz, z.B. den witterungsbeständigen Einsatz im Hochbau.

Gips verfügt über sehr günstige Materialeigenschaften, die ihn für Bauanwendungen attraktiv machen. Hierzu gehören ein natürlicher Feuchteausgleich mit der Umgebung, ein niedriger Wasserdampfpermeationswiderstand, ein gutes Brandschutzverhalten, keine Emission von schädlichen Stoffen, ein niedriges spezifisches Gewicht sowie geringe Herstellungskosten. Ein entscheidender Nachteil liegt in der niedrigen Beständigkeit gegenüber Wasser, da Gips eine relativ hohe Löslichkeit in Wasser aufweist. Selbst wenn lediglich die Gefahr einer längeren Auffeuchtung der Gipsplatte besteht, ist eine Anwendung von Gipswerkstoffen nicht zulässig. Gips neigt unter diesen Bedingungen zu Kriechverformungen und es treten irreversible Schäden der Gipsstruktur auf, die auch als Faulen bezeichnet werden. Aus diesem Grunde sind Bauplatten für den Außenbereich, die überwiegend aus Gips bestehen und direkt bewittert werden, bisher nicht bekannt.

Auf dem Markt sind verschiedene Formen von Gipsplatten für Innenanwendungen. Besonders weite Verbreitung hat die Gipskartonplatte gefunden. Dabei wird die Gipskemplatte beidseitig mit einer Kartonschicht kaschiert. Ein Nachteil der Gipskartonplatte ist die starke Brennbarkeit des Kartons, ein anderer die geringe Wasserbeständigkeit. Um eine höhere Brandsicherheit zu erreichen, wurde in der DE OS 28 08 723 eine Gipsplatte vorgeschlagen, die mit einem Glasfaservlies kaschiert ist. Dabei können anorganische Partikel in den Binder des Glasfaservlieses eingearbeitet sein, der die Fasern des Vlieses zusammenhält. So beschreibt die DE 31 13 682 A1 die Verwendung bestimmter anorganischer Hydroxide im Binder, um beim Abbinden des in flüssiger Form aufgebrachten Gipsbreis eine chemische Brückenbildung zu bewirken, durch die die Festigkeit der Verbindung zwischen der Umhüllung und dem Gipskem verbessert wird. Der Zusatz verbessert außerdem den Flammschutz der Gipsbauplatte. In der DE 35 08 933 A1 wird vorgeschlagen, auf einer Seite des Gipskerns ein Glasfaservlies anzuordnen, das auf seiner Außenseite mit einem Kunstharz-Klebemittel so beschichtet ist, daß der Überzug als Bewehrung gegen Abrieb dienen kann. In den organischen Binder sind zu Brandschutzzwecken diskrete anorganische Partikel eingearbeitet, wobei auch eine verbesserte Luft- und Dampfdurchlässigkeit erreicht wird. Ein ähnlich aufgebautes Vlies beschreibt auch die DE 34 08 932 A1. Dieses wird einseitig mit einem anorganischen, pulverförmigen Material und einem Bindemittel beschichtet, wobei darauf zu achten ist, dass die offene Struktur des Vlieses auf der der Beschichtung abgewandten Seite erhalten bleibt, um eine gute Verankerung des Vlieses mit der Gipsplatte zu gewährleisten. In den Patentschriften DE 195 27 857 und DE 195 27 858 wurde vorgeschlagen, aus produktionstechnischen Gründen und zur Erhöhung der Haftfestigkeit zwischen Gipsplatte und Vlies das Glasfaservlies mit einer anorganischen, ein organisches Bindemittel und ggf. weitere Zusatzstoffe enthaltenden, im wesentlichen aus Calciumsulfat bestehenden Beschichtung zu versehen. Einseitige Beschichtungen des Glasfaservlieses werden auch öfter vorgeschlagen, um bei der nachfolgenden Produktion der Gipskemplatte das Durchfließen des Gipsbreies durch das Vlies und die damit einhergehende Verschmutzung des Förderbandes zu vermeiden (siehe z.B. DE 39 37 433 A1).

Auch bei solchen Gipsplatten, die vom Hersteller für Außenanwendungen vorgeschlagen werden, handelt es sich um Produkte, die entweder keinem direkten Regenwasser ausgesetzt werden dürfen und daher einen äußeren Schutz benötigen (z.B. Wärmedämmverbundsysteme), oder die Bauplatte besteht nur zu einem relativ geringen Anteil aus Gips. Im ersten Fall ist der Einsatz der Gipsplatte mit einem relativ hohen Aufwand verbunden. Dagegen handelt es sich im zweiten Fall nicht um eine Gipsplatte im Sinne der vorliegenden Anmeldung, da ein beträchtlicher oder sogar der überwiegende Anteil beispielsweise aus Zement besteht (siehe DE 39 37 429 A1).

Darüber hinaus sind Hydrophobiermittel bekannt, die einer Gipsmasse vor dem Abbinden zugesetzt werden können (Massehydrophobierung) oder auf das erhärtete Produkt nachträglich aufgetragen werden (Oberflächenhydrophobierung). Auf diese Weise können Gipsbauplatten hergestellt werden, die auch für den Einsatz in Feuchträumen geeignet sind. Die Wirkung dieser Schutzmaßnahme reicht aber nicht aus, um die Gipsplatte auch für den Einsatz im Außenbereich zuzulassen, wo sie im direkten Kontakt auch starken Niederschlägen ausgesetzt wird.

**Aufgabe** der vorliegende Erfindung ist es, eine Gipsbauplatte für Außenanwendungen bereitzustellen, die direkt der Bewitterung ausgesetzt werden kann, aber dennoch den Feuchteausgleich des Gipses und der unter Umständen vorhandenen angrenzenden Bauteile nicht verhindert.

In Lösung der Aufgabe wird ein mehrschichtiger Werkstoff mit einer Gipskemplatte bereitgestellt, die auf einer Seite (die als Außenseite vorgesehen ist) oder auf beiden Seiten mit einer Schutzschicht versehen ist, welche für Wasserdampf durchlässig ist und damit weiter den Feuchteausgleich des Gipses ermöglicht, andererseits aber flüssiges Wasser vom Kontakt mit dem Gips abhält und eine verbesserte Luftdichte aufweist. Diese wasserabweisende und dampfdurchlässige Schutzschicht umfaßt ein textiles Fasergebilde aus mechanisch stabilen Fasern, die unbrennbar und bewitterungsstabil sind, in Kombination mit einem feine Poren aufweisenden, wasserunlöslichen Material, das sich innerhalb der Faserschicht befindet und deren Zwischenräume füllt, derart, daß die Schutzschicht druckdicht für flüssiges Wasser von mindestens 100 mm Wassersäule ist, Wasserdampf auf Grund einer günstigen diffusionsäquivalenten Luftschichtdicke von deutlich weniger als 2,0 m, insbesondere von weniger als 1,0 m dagegen passieren läßt, und zumindest an ihrer Außenseite wasserunlöslich ist.

Das Fasermaterial für das textile Fasergebilde ist nicht beschränkt, sofern es die notwendigen Eigenschaften aufweist. Gut geeignet sind anorganische Fasern wie beispielsweise Glasfasern oder mineralische, insbesondere keramische Fasern. Auch die Struktur des Fasergebildes ist nicht kritisch, sofern die Fasern untereinander mechanisch stabil verbunden sind. So können Gelege, Gewebe, Gewirke, Vliese oder ähnliches eingesetzt werden. Die Fasern können mit Hilfe eines Binders untereinander fixiert sein, der vorzugsweise, aber nicht notwendigerweise ein organischer Binder ist. Ein gut geeignetes Bindermaterial ist Melaminharz. Ein erfindungsgemäß besonders bevorzugtes textiles Fasermaterial ist ein Glasfaservlies, insbesondere aus E-Glas, dessen Fasern mit Melaminharz fixiert sind. Diese Materialien weisen eine gute Witterungsbeständigkeit auf.

Dadurch, daß das textile Fasermaterial mit einem feine, offene Poren aufweisenden Material gefüllt ist, bleibt die zweite Schicht des Mehrschichtwerkstoffs durchlässig (diffusionsoffen) für gasförmiges Wasser. Denn die Durchlässigkeit von Gasen ist allein vom Vorhandensein von Poren und deren Größe abhängig, aber nicht von den chemischen Eigenschaften des diese Poren ausbildenden Materials. Anders ist es mit der Durchlässigkeit für flüssiges Wasser: Diese wird nicht nur durch die Porengröße, sondern auch durch die Hydrophilie/Hydrophobie des Materials bestimmt. Ein für die Erfindung notwendiges Kriterium ist daher natürlich, daß das Material keine groben Risse oder Löcher aufweisen darf, durch die flüssiges Wasser in die Platte eindringen könnte, auch wenn das verwendete Material ausreichend hydrophob wäre. Dies wird dadurch erreicht, daß das Fasermaterial mit dem feine Poren aufweisenden Material befüllt ist. Allein durch Beschichten mit einer pastösen Masse läßt sich eine solche Befüllung nicht erreichen, weshalb es günstig ist, entweder ein Polymer direkt im Fasermaterial auszufällen oder aber das Fasermaterial mit einem gelösten oder dispergierten/suspendierten Polymer oder dessen Vorstufen zu tränken, dann das Lösungsmittel zu entfernen und ggf. eine Vernetzung des Materials herbeizuführen.

Wie voranstehend erwähnt, wird die Eigenschaft der zweiten Schicht, wasserabweisend zu sein bzw. den Durchtritt von Wasser zu verhindern, nicht nur durch die Porengrößen, sondern auch und vor allem durch die Hydrophobie des feine Poren aufweisenden Materials bestimmt. Hydrophile Materialien, wie sie bisher zur Beschichtung von Glasfaservliesen verwendet wurden und z.B. in den vorgenannten Druckschriften DE 34 08 932 A1 und De 35 08 933 A1 beschrieben sind, sind daher für die vorliegende Erfindung ungeeignet, auch wenn sie Poren aufweisen und damit eine gewisse Luftdurchlässigkeit besitzen. Bei diesen Materialien handelt es sich um anorganischer Stoffe wie Calciumcarbonat, Aluminiumhydroxid und -oxidhydrate, Perlite, Kalkstein, Gips oder Vermiculit oder dergleichen. Sie sind nicht nur alle hydrophil, sondern teilweise sogar hygroskopisch.

Unter dem Ausdruck "feine Poren aufweisendes Material" soll erfindungsgemäß ein Material mit Poren solcher Abmessungen verstanden werden, daß der Durchtritt von flüssigem Wasser verhindert, der Durchtritt von gasförmigem Wasser, also Wasserdampf, jedoch möglich ist. Da diese Eigenschaften nicht nur von den Abmessungen der Poren als solchen sondern auch von den Eigenschaften des porenbildenden Materials, insbesondere dessen Hydrophilie oder Hydrophobie, abhängig sind, können die Poren von hydrophobem Material größer sein als die von hydrophilerem Material, ohne daß der gewünschte Effekt verloren ginge. Dementsprechend soll der Ausdruck "feine Poren", Poren mit Porengrößen von nm- bis in den µm-Bereich umfassen, sofern das sie umgebende Material ausreichend hydrophob ist, um einen Wasserdurchtritt zu verhindern. Diese Hydrophobie kann beispielsweise durch den Randwinkel eines auf dem zu bestimmenden Material aufliegenden Wassertropfens bestimmt werden. Für die vorliegende Erfindung sind besonders solche Materialien geeignet, auf denen ein Wassertropfen mit einem Randwinkel von 80° bis 140°, bevorzugt von 95° bis 130° steht.

Das feine Poren ausbildende Material kann ein anorganisches, ein organisches oder ein anorganisch-organisches Polymer-Material sein oder auf der Basis von Mischungen solcher Materialien gebildet sein. Für die vorliegende Erfindung geeignete Polymere sind in Wasser im wesentlichen unlöslich, besitzen aber dennoch eine ausreichende Hydrophilie, um in Gegenwart von Wasser eine zusammenhängende feinporige Schicht zu bilden. Ein weiteres gewünschtes Kriterium ist eine ausreichende UV-Stabilität, so daß aromatische Verbindungen nur bedingt, d.h. bei entsprechender Stabilisierung, eingesetzt werden können. Bevorzugt sind unter den organischen Polymeren dementsprechend sauerstoffhaltige Materialien, z.B. Estergruppen enthaltende Polymere wie Polyester, Celluloseester und Derivate der Stärke, Copolymere mit Vinylacetat wie Ethylen-Vinylacetat-Copolymere (EVA), aber auch z.B. Polyurethane aus aliphatischen bzw. cycloaliphatischen Diisocyanaten. Auch Säuregruppen enthaltende Copolymere wie Copolymere auf der Basis von Maleinsäure oder Acryl- bzw. Methacrylsäure sind Beispiele für solche sauerstoffhaltigen Polymere mit hydrophilen Eigenschaften. Weiterhin können vernetzte Polymere, die bei der Applikation zunächst als Oligomere vorliegen und erst nach der Schichtbildung vernetzen und wasserunlöslich werden, als feine Poren bildendes Material eingesetzt werden.

Auch anorganisch-organische oder rein anorganische Materialien können verwendet werden. Ein Beispiel ist Wasserglas, das beispielsweise durch den Einsatz von mehrwertigen Kationen oder Phosphaten, besonders Aluminiumphosphat, chemisch gehärtet wird. Durch die chemische Härtung erreicht es eine hohe Wasserbeständigkeit. Zu den anorganischen Polymeren zählen weiterhin die sogenannten Geopolymere, das sind meist amorphe bis semikristalline, dreidimensionale Silicium-Aluminate, die sich durch sogenannte Geosynthese herstellen lassen, d.h. bei Temperaturen unterhalb von üblichen Sintertemperaturen, in der Regel deutlich unterhalb von 450°C. Sie lassen sich beispielsweise aus oberflächenreaktiven Füllstoffen, sogenannten Phyllo-Silikaten (Kaolinit, Montmorillonit, Halloysit) mit konzentrierter Natronlauge oder Wasserglas gewinnen und können 8-und/oder 12-gliedrige Ringe aus Si, Al und O enthalten. Solche Geopolymere sind beispielsweise ausführlich in Journal of Materials Education, Bd. 16 (283), S. 91-139 (1994) oder in Alkaline Cements and Concretes, KIEV, Ukraine, 1994, Properties of Geopolymer Cements beschrieben. Da sie teilweise sogar unter 100°C aushärten (abbinden, kondensieren), werden sie auch kalt aushärtende Keramiken genannt.

Sowohl das Wasserglas als auch die Geopolymere können bei Bedarf hydrophobiert werden, z.B. einer Massehydrophobierung unterzogen werden.

Besonders günstig ist es, eine Mischung von organischem und anorganischem Material einzusetzen.

Es besteht eine Reihe verschiedener Möglichkeiten, das textile Fasermaterial mit dem feine Poren ausbildenden Material zu füllen. Besonders günstig sind dabei Verfahren, durch die das feinporige Material im Faservlies oder der Fasermatte ausgefällt wird oder Verfahren, bei denen das Vlies oder die Matte mit einer Lösung, Suspension oder Dispersion getränkt wird, aus der nach Entfernen des Lösungsmittels das feinporige Material entsteht oder zurückbleibt.

In einer Ausgestaltung der Erfindung wird dementsprechend eine feinporige Struktur in dem flächigen, textilen Fasergebilde dadurch erzeugt, daß die Faserschicht in einer Lösung eines in einem organischen Lösungsmittel löslichen Polymers getränkt wird. Nach dem Herausziehen der Faserschicht aus der Lösung wird sie eine bestimmte Zeit an der Luft getrocknet und anschließend in ein Lösungsmittel, z.B. ein Wasserbad, getaucht, worin das Polymer nicht löslich ist und daher ausfällt. Dabei bildet sich eine feinporige Schicht in der Faserschicht. Der Vorgang kann ggf. so oft wiederholt werden, bis eine ausreichend Füllung erzielt ist (d.h. keine groben Löcher oder Poren mehr in der Faserschicht vorhanden sind). Nach dem Herausziehen aus dem Wasserbad wird die gefüllte Faserschicht vollständig getrocknet. Die in dem Fasergebilde erzeugte feinporige Schicht hat bei geeigneter Wahl des Polymers wasserabweisende Wirkung bei gleichzeitiger Durchlässigkeit für Wasserdampf. Die wasserabweisende Wirkung kann bereits daran erkannt werden, daß ein auf die Faseroberfläche gelegter Wassertropfen nicht in die Schicht eindringt, sondern einen deutlichen Randwinkel ausbildet.

Polymermaterialien, die zur Ausbildung einer feinporigen Struktur in der textilen Fasermaterial-Schicht nach diesem Verfahren eingesetzt werden können, sind z.B. Cellulosepropionat, Cellulosebutyrat sowie Copolymere aus Ethylen und Vinylacetat. Beim Ethylen-Vinylacetat-Copolymer hängt die Löslichkeit im Lösungsmittel (geeignet ist Aceton) vom Anteilverhältnis der beiden Monomere ab. Es kann ein Massenverhältnis der beiden Monomere von 20 : 80 oder von 40 : 60 verwendet werden. Mit einem Ethylen-Vinylacetat-Copolymer mit einem Massenverhältnis von 20 : 80 wurde eine feinporige Schicht in einem Glasfaservlies hergestellt, die bei einer Wasserhöhe von 150 mm einen Wasserdurchtritt verhindert.

In einer anderen Ausgestaltung der Erfindung wird eine feinporige Struktur in der textilen Fasermaterial-Schicht dadurch erzeugt, daß die Schicht einmal oder ggf. mehrmals in einer Polymerdispersion getränkt und nach dem Herausziehen getrocknet wird. Die Polymerdispersion besteht beispielsweise aus kleinen Polymerteilchen (disperse Phase) in Wasser (kontinuierliche Phase). Bei der Herstellung der feinporigen Schicht in der Faserschicht kommt es zur Bildung von filmartigen Strukturen zwischen den Fasern, die den Durchtritt des Wassers verhindern. Ein Beispiel für die Herstellung einer feinporigen Schicht nach dieser Vorgehensweise ist die Verwendung einer wäßrigen Acrylatdispersion. Ein mit einer Acrylatdispersion so befülltes Glasfaservlies konnte eine Wassersäule von mehr als 400 mm Höhe am Durchtritt durch das Vlies hindern.

In einer weiteren Ausgestaltung der Erfindung wird die textile Faserschicht mit der Lösung oder Suspension eines anorganischen Materials behandelt. Insbesondere eignen sich hierfür Lösungen von Wasserglas und/oder einem der bereits vorstehend erwähnten Geopolymere. Letztere lassen sich nach Tränken des Fasermaterials mit einer entsprechende Ausgangsmaterialien enthaltenden Lösung bei relativ niedrigen Temperaturen einer Kondensationsreaktion unterwerfen, weshalb sie für die vorliegende Erfindung besonders geeignet sind. Teilweise erfolgt das Abbinden sogar bei Raumtemperatur oder zumindest bei derart milden Temperaturen, daß der im textilen Fasermaterial ggf. enthaltene Binder nicht geschädigt wird. Wenn das eingesetzte Geopolymer keiner vorherigen Massehydrophobierung unterzogen wurde, ist es bevorzugt, seine Hydrophobie nachträglich zu erhöhen, z. B. mit Hilfe einer Oberflächensilanisierung, um die Oberfläche wasserabstoßend zu machen.

Das textile Fasermaterial kann durch Aufkaschieren oder auf andere Weise mit dem Gipskern verbunden werden. Günstig ist es, wenn das textile Fasermaterial zuerst mit dem die feinen Poren aufweisenden oder ausbildenden Material imprägniert wird und nach Abbinden oder Trocknen dieses Materials das Fasermaterial auf eine Unterlage gelegt und mit dem gegebenenfalls Zusatzstoffe enthaltenden Gipsbrei bestrichen oder anders belegt wird. Beim Abbinden des Gipses entsteht eine innige Verbindung der Gipsplatte mit dem textilen Fasermaterial. Alternativ kann das textile Fasermaterial mechanisch, z.B. durch Klammern, mit der.bereits gehärteten Gipsplatte verbunden werden. Auch eine Verklebung ist möglich, wobei darauf zu achten ist, daß dabei keine durchgehende Klebschicht erzeugt wird, die den Durchtritt des Wasserdampfs hemmt.

Die Gipskernplatte, die als Trägerplatte fungiert, besitzt eine Matrix aus Gips (Calciumsulfat-Dihydrat, CaSO₄x2H₂O). Die Platte kann ausschließlich aus Gips bestehen, enthält aber in der Regel Bewehrungspartikel (z.B. Fasern oder Späne), häufig auch Hydrophobierungsmittel und gegebenenfalls weitere Zusatzmittel oder Zusatzstoffe, die dem Fachmann bekannt sind. Hierunter fallen beispielsweise Abbindeverzögerer, Abbindebeschleuniger, die Rheologie beeinflussende Stoffe oder Porenmittel. Der Gipsanteil in der Platte beträgt vorzugsweise 50-100 Gew.-%, stärker bevorzugt etwa 78-97 Gew.-% und besonders bevorzugt zwischen etwa 80 und 93 Gew.-%.

Es ist häufig wünschenswert, die Gipsplatte mit einer Massehydrophobierung auf der Basis von Siliconen, Paraffinen, Wachsen, Kunstharzen oder ähnlichem zu versehen, wie sie für den Einsatz in Feuchträumen bereits bekannt ist. Die Massehydrophobierung soll verhindern, daß sich größere Wassermengen auf der Innenseite des textilen Fasermaterials ansammeln und das Gipsgefüge mit der Zeit auflösen und zerstören.

Eine besonders preisgünstige Massehydrophobierung kann durch den Einsatz fester Stoffe (Paraffin, Wachs, Mikokapseln) mit Hydrophobierungswirkung erzielt werden. Hierzu werden die feinteiligen Hydrophobierungsmittel direkt der Frischmasse aus einem abbindefähigen Calciumsulfat und ggf. den Bewehrungspartikeln zugegeben. Um das Hydrophobierungsmittel in der Matrix gleichmäßig zu verteilen, kann der Werkstoff im Anschluß an die Erhärtung des Calciumsulfates einer gezielten Wärmebehandlung unterzogen werden. Bei dieser Wärmebehandlung schmilzt das feste Hydrophobierungsmittel auf, und die Matrix wird von innen heraus getränkt. Die Wärmebehandlung kann in einem Durchlauftrockner oder mittels einer Hochfrequenz- bzw. Mikrowellenbehandlung erfolgen. Besonders vorteilhaft sind feste Hydrophobierungsmittel dann, wenn flüssige Hydrophobierungsmittel das Hydratationsverhalten des Calciumsulfates negativ beeinflussen.

Zur Erhöhung der Festigkeit kann die Gipsplatte auch Bewehrungspartikel, z.B. Fasern oder Späne, enthalten, vorzugsweise in einem Anteil von 0,5-35 Gew.-%, stärker bevorzugt in einem Anteil von 1-30 Gew.-% und besonders bevorzugt in einem Anteil von 5-25 Gew.-%, bezogen auf die Menge an gipshaltiger Trockenmasse, die zum Anrühren des Gipsbreis verwendet wird. Die Bewehrungspartikel können aus organischen oder anorganischen Materialien wie Glas oder Cellulose bestehen oder diese Materialien als Kern enthalten. Die Späne oder Fasern können zur Verbesserung der Haftung ggf. oberflächenmodifiziert sein, z.B. durch eine Modifizierung mit Silanen. Darüber hinaus kann die Gipskernplatte mit leichten Füllstoffen wie Perlit versehen oder unter Verwendung eines Porenbildners wie z.B. dem Natriumsalz eines Olefinsulfonats (z.B. Hostapur OSB, Hoechst) aufgeschäumt sein, um das Gewicht zu senken und die thermische Wärmedämmfähigkeit zu erhöhen. Durch die Zusätze wird auch ein Feuchtverhalten in der Art erreicht, daß der Wassserdampfdiffusionswiderstand mit steigendem Materialfeuchtegehalt abnimmt, damit eine feuchte Platte schneller als eine weniger feuchte austrocknet und im anderen Fall eine trockene Platte langsamer auffeuchtet.

Zur Erzeugung der wasserabweisenden Eigenschaft und der Dampfdurchlässigkeit wird die Gipskernplatte erfindungsgemäß wie erwähnt mindestens einseitig mit dem textilen Fasermaterial kombiniert, dessen Zwischenräume mit einem feine Poren aufweisenden Material befüllt sind. Dabei ist darauf zu achten, daß das jeweilige Herstellungsverfahren bei Temperaturen erfolgt, die eine Schädigung anderer Komponenten der Gipsplatte ausschließen. Das bedeutet, daß dann, wenn das feine Poren aufweisende Material als Füllmaterial erst im textilen Fasergebilde ausgebildet werden soll, dies bei derart niedrigen Temperaturen erfolgen muß, daß es zu keiner Schädigung möglicherweise im Fasergebilde bereits enthaltener Materialien wie organischem Binder kommt.

Erfindungsgemäß werden mit den beschriebenen Maßnahmen mehrschichtige Werkstoffplatten hergestellt, die einem Wasserdruck von mehr als 1000 Pa, vorzugsweise von mehr als 1500 Pa auf der vlieskaschierten Seite standhalten, ohne daß Wasser durch das Vlies hindurchtritt. Der Wasseraufnahmekoeffizient liegt deutlich unter 0,5 kg/(m²√t). Die diffusionsäquivalente Luftschichtdicke beträgt bei einer Plattendicke von 0,1 m deutlich weniger als 1,0 m. In bevorzugten Ausgestaltungen der Erfindung liegt sie bei 0,6, stärker bevorzugt bei 0,3 und in besonders günstigen Fällen sogar bei unter 0,2 m.

Nachstehend soll die Erfindung anhand von **Beispielen** näher erläutert werden.

### Beispiel 1

Ein mit Melaminharz gebundenes Vlies aus E-Glasfasem mit einer Porenweite zwischen den Fasern von etwa 10-100 Mikrometern wird in einer Lösung aus 50g Cellulosepropionat in 950g Aceton 0,5 Minuten lang getränkt. Nach dem Herausziehen aus der Lösung läßt man die überschüssige Lösung abtropfen und einen Teil des Acetons verdampfen. Nach 2,5 Minuten wird das Vlies in ein Wasserbad getaucht und hierin 6 Stunden gelagert. Anschließend wird das Vlies 16 Stunden im Trockenschrank bei 40°C getrocknet. Das getrocknete Vlies wird auf eine ebene Metallplatte gelegt, auf die ein 1 cm hoher Rahmen geschraubt wird. Der Rahmen wird mit einem Brei aus Stuckgips gefüllt, zu dem beim Anmachen 0,5% eines Silicon-Hydrophobiermittels hinzugefügt werden. Der Gipsbrei wird durch Rütteln in dem Rahmen verteilt. Die überschüssige Menge wird durch Abstreifen entfernt. Nach einer Abbindezeit von einer Stunde wird der Rahmen entfernt. Die Gipsplatte wird 24 Stunden an Raumluft und weitere 24 Stunden in Trockenschrank bei 40°C getrocknet.

### Beispiel 2

Ein mit Melaminharz gebundenes Vlies aus E-Glasfasern wird in einer wäßrigen Polyacrylat-Dispersion eine Minute lang getränkt. Nach dem Herausziehen aus der Dispersion läßt man einen Teil der überschüssigen Flüssigkeit abtropfen. Auf einer ebenen Unterlage wird die überstehende Dispersion auf beiden Seiten von der Vliesoberfläche abgestreift. Anschließend wird das Vlies 24 Stunden im Trockenschrank bei 40°C getrocknet. Das getrocknete Vlies wird auf eine ebene Metallplatte gelegt, auf die ein 1 cm hoher Rahmen geschraubt wird. Wie in Beispiel 1 beschrieben wird der Rahmen mit Gips gefüllt, und der Gips wird nach dem Abbinden getrocknet.

### Beispiel 3

Ein mit Melaminharz gebundenes Vlies aus E-Glasfasern wird mit einer Mischung aus 45g eines oberflächenreaktiven alumosilicatischen Pulvers, 55g Wasserglas und 5g Wasser (Geopolymermischung) bestrichen. Die Geopolymermischung wird durch Walzen auf dem Vlies gleichmäßig verteilt. Das beschichtete Vlies wird 72 Stunden an Raumluft und weitere 24 Stunden im Trockenschrank bei 40°C getrocknet. Das getrocknete Vlies wird auf eine ebene Metallplatte gelegt, auf die ein 1 cm hoher Rahmen geschraubt wird. Wie in Beispiel 1 beschrieben wird der Rahmen mit Gips gefüllt, und der Gips wird nach dem Abbinden getrocknet.

### Beispiel 4

Zur Charakterisierung der Vlieseigenschaften wurde ein mit Melaminharz gebundenes Vlies aus E-Glasfasern mit einer Druckdichte von 0 mm Wassersäule sowie mit einer Porenweite zwischen den Fasern von etwa 10-100 Mikrometern in einer Lösung aus Ethylen-Vinylacetat-Copolymer (Konzentration 5, 10, und 15 M.-%) getränkt und das Polymer nach unterschiedlichen Lüftzeiten zum Fällen gebracht. Bei einer Konzentration von 5 % und einer Lüftzeit von 1 min konnte nach 5 Beschichtungsvorgängen eine Druckdichte von 320 mm Wassersäule erreicht werden. Bei einer Konzentration von 5 % und einer Lüftzeit von 1 min und einem Beschichtungsvorgang betrug die Druckdichte 145 mm Wassersäule. In beiden Fällen konnte keine Änderung der Wasserdampfdurchlässigkeit gegenüber dem unbehandelten Vlies ermittelt werden.

In allen Beispielen wurde die Verbundplatte auf ihre Diffusionseigenschaften und ihre wasserabweisenden Eigenschaften untersucht. Als Maßzahl für die Diffusionseigenschaften wurden die Wasserdampfdiffusionswiderstandszahlen (µ-Wert) im Trockenbereich und für die wasserabweisenden Eigenschaften die Wasseraufnahmekoeffizienten (w-Werte, kg/(m²h^{-½})) herangezogen. Eine Gipsplatte (Dicke 0,01 m) ohne Hydrophobierungsmittel und ohne Vlies hat einen µ-Wert von 8 und einen w-Wert (1h) von 3,90 kg/(m²h^{-½}). Mit einem üblichen Hydrophobierungsmittel (0,5 M.-%) wurde ein µ-Wert von 8 und ein w-Wert von 0,32 kg/(m²h^{-½}) ermittelt. Bei einer Verbundplatte mit 0,5 % Hydrophobierungsmittel in der Trägerplatte und einem erfindungsgemäß behandelten Vlies betrug der w-Wert 0,03 kg/(m²h^{-½}) und der µ-Wert 9.

## Patentansprüche

1. Mehrschicht-Werkstoff mit
(a) einer ersten Schicht, die aus Gips oder zu wesentlichen Teilen aus Gips besteht, und
(b) mindestens einer zweiten Schicht, umfassend ein schichtförmiges textiles Fasermaterial, dessen Fasern untereinander mechanisch stabil verbunden, unbrennbar und witterungsstabil sind, und dessen Zwischenräume mit einem feine Poren aufweisenden Material gefüllt sind, wobei die zweite Schicht eine diffusionsäquivalente Luftschichtdicke von unter 2,0 m aufweist und bei einem Wasserdruck von mindestens 100 mm Wassersäule wasserundurchlässig ist.

2. Mehrschicht-Werkstoff nach Anspruch 1, wobei die diffusionsäquivalente Luftschichtdicke der zweiten Schicht unter 1,0 m, vorzugsweise unter 0,2 m liegt und/oder die Schicht bei einem Wasserdruck von mindestens 150 mm Wassersäule wasserundurchlässig ist.

3. Mehrschicht-Werkstoff nach Anspruch 1 oder 2, **dadurch gekennzeichnet, daß** das feine Poren aufweisende Material durch Ausfällen eines Polymers in den Zwischenräumen und ggf. auf der Oberfläche des schichtförmigen textilen Fasermaterials oder durch Tränken des schichtförmigen textilen Fasermaterials mit einer Lösung, Dispersion oder Suspension eines Materials in einem Lösungsmittel, Entfernen des Lösungsmittels und ggf. Vernetzen oder Aushärten des dabei entstandenen Polymers erzeugt wurde.

4. Mehrschicht-Werkstoff nach Anspruch 3, **dadurch gekennzeichnet, daß** das Polymer ausgewählt ist unter Polyestern, Polyacrylaten, Celluloseestem, Derivaten der Stärke, Copolymeren mit Vinylacetat, Polyurethanen aus aliphatischen bzw. cycloaliphatischen Diisocyanaten, säuregruppenhaltigen Copolymeren wie Copolymeren auf der Basis von Maleinsäure und/oder Acryl- bzw. Methacrylsäure, und Copolymeren oder Polymermischungen hiervon.

5. Mehrschicht-Werkstoff nach einem der Ansprüche 1 bis 3, **dadurch gekennzeichnet, daß** das feine Poren aufweisende Material teilweise oder ganz ein anorganisches Material, insbesondere ein Geopolymer ist oder aus Wasserglas durch Härtung hergestellt wurde.

6. Mehrschicht-Werkstoff nach einem der voranstehenden Ansprüche, **dadurch gekennzeichnet, daß** die Gipsschicht weiterhin Bewehrungspartikel aus anorganischen oder organischen Fasern bzw. Spänen aufweist.

7. Mehrschicht-Werkstoff nach Anspruch 6, **dadurch gekennzeichnet, daß** die Bewehrungspartikel aus Glas, Stein Cellulose, Lignocellulose oder Gemischen dieser Materialien bestehen oder diese enthalten.

8. Verfahren zum Herstellen eines Mehrschicht-Werkstoffs nach einem der Ansprüche 1 bis 7, **dadurch gekennzeichnet, daß** die Gips-Schicht durch Härtung eines massehydrophobierten Calciumsulfat-Breis erzeugt wird und/oder daß die Gips-Schicht nach Härten eines Calciumsulfat-Breis oberflächenhydrophobiert wird.

9. Verfahren nach Anspruch 8, **dadurch gekennzeichnet, daß** der Calciumsulfatbrei vor dem Härten mit einem festen, flüssigen oder emulsionsförmigen Hydrophobierungsmittel versetzt wird.

10. Verfahren nach Anspruch 9, **dadurch gekennzeichnet, daß** das Hydrophobierungsmittel teilweise oder ganz aus Mikrokapseln mit einer bei Raumtemperatur festen, schmelzbaren Außenhülle und einer Füllung aus einem flüssigen Hydrophobierungsmittel oder aus einem bei Raumtemperatur festen, aber schmelzbaren Pulver besteht und während oder nach der Härtung auf die Schmelztemperatur des Hydrophobierungsmittels erwärmt wird.

11. Verfahren zum Herstellen eines Mehrschicht-Werkstoffs nach einem der Ansprüche 1 bis 7, **dadurch gekennzeichnet, daß** das textile Fasermaterial mit einem feine Poren aufweisenden oder feine Poren bildenden Material befüllt wird und anschließend ggf. die feinen Poren erzeugt werden und ggf. das gefüllte Fasermaterial getrocknet wird worauf es mit Calciumsulfat-Brei in Kontakt gebracht wird, der anschließend gehärtet wird.

12. Verfahren zum Herstellen eines Mehrschicht-Werkstoffs nach einem nach einem der Ansprüche 1 bis 7, **dadurch gekennzeichnet, daß** das textile Fasermaterial mit einem feine Poren aufweisenden oder feine Poren bildenden Material befüllt wird, anschließend ggf. die feinen Poren erzeugt werden und ggf. das gefüllte Fasermaterial getrocknet wird, worauf es mit einer bereits erhärteten Gips-Schicht verbunden wird.

## Claims

1. Multilayer material having
(a) a first layer which comprises gypsum or substantially comprises gypsum; and
(b) at least a second layer, comprising a stratiform textile fibre material, the fibres of which are connected to one another in a mechanically stable manner, are incombustible and weather-resistant, and the interstices of which are filled with a material which has fine pores, the second layer having a diffusion-equivalent air layer thickness of below 2.0 m and is water-impermeable at a water pressure of at least 100 mm water column.

2. Multilayer material according to claim 1, the diffusion-equivalent air layer thickness of the second layer being below 1.0 m, preferably below 0.2 m and/or the layer being water-impermeable at a water pressure of at least 150 mm water column.

3. Multilayer material according to claim 1 or 2, **characterised in that** the material having fine pores was produced by precipitating a polymer in the interstices and possibly on the surface of the stratiform textile fibre material, or by impregnating the stratiform textile fibre material with a solution, dispersion or suspension of a material in a solvent, removing the solvent and possibly cross-linking or hardening the polymer thus produced.

4. Multilayer material according to claim 3, **characterised in that** the polymer is selected from polyesters, polyacrylates, cellulose esters, derivatives of starch, copolymers with vinyl acetate, polyurethanes formed from aliphatic or cycloaliphatic diisocyanates, copolymers containing acid groups as well as copolymers based on maleic acid and/or acrylic or methacrylic acid, and copolymers or polymer mixtures thereof.

5. Multilayer material according to one of claims 1 to 3, **characterised in that** the material having fine pores is partially or completely an inorganic material, especially a geopolymer or was produced from waterglass by hardening.

6. Multilayer material according to one of the preceding claims, **characterised in that** the gypsum layer has in addition reinforcing particles of inorganic or organic fibres or chips.

7. Multilayer material according to claim 6, **characterised in that** the reinforcing particles consist of glass, rock cellulose, lignocellulose or mixtures of these materials, or contain same.

8. Method of producing a multilayer material according to one of claims 1 to 7, **characterised in that** the gypsum layer is produced by hardening a mass-hydrophobed calcium sulphate paste and/or **in that** the gypsum layer is surface-hydrophobed after hardening of a calcium sulphate paste.

9. Method according to claim 8, **characterised in that** the calcium sulphate paste is mixed before hardening with a solid or liquid hydrophobing agent or one in emulsion form.

10. Method according to claim 9, **characterised in that** the hydrophobing agent comprises partially or completely microcapsules which have an outer coating which is meltable but solid at room temperature, and a filling of a liquid hydrophobing agent or of a powder which is meltable but solid at room temperature, and is heated during or after the hardening to the melting temperature of the hydrophobing agent.

11. Method of producing a multilayer material according to one of claims 1 to 7, **characterised in that** the textile fibre material is filled with a material which has fine pores or forms fine pores, and then if necessary the fine pores are produced and the filled fibre material is possibly dried, whereupon it is brought into contact with calcium sulphate paste which is then hardened.

12. Method of producing a multilayer material according to one of claims 1 to 7, **characterised in that** the textile fibre material is filled with a material which has fine pores or forms fine pores, then if necessary the fine pores are produced and the filled fibre material is possibly dried, whereupon it is connected to an already hardened gypsum layer.

## Revendications

1. Laminé multi-couche présentant
(a) une première couche qui est en plâtre ou principalement en plâtre et
(b) au moins une deuxième couche comprenant un matériau fibreux textile sous forme de couches dont les fibres sont reliées entre elles de manière mécaniquement stable, sont ininflammables et stables face aux intempéries et dont les interstices sont remplis avec un matériau présentant des pores fins, moyennant quoi la deuxième couche présente une épaisseur de vide d'air de diffusion équivalente inférieure à 2,0 m et est étanche à une pression d'eau d'au moins 100 mm de colonne d'eau.

2. Laminé selon la revendication 1,
dans lequel l'épaisseur du vide d'air de diffusion équivalente de la deuxième couche est inférieure à 1,0 m, de préférence inférieure à 0,2 m et/ou la couche est étanche à une pression d'eau d'au moins 150 mm de colonne d'eau.

3. Laminé selon la revendication 1 ou 2,
**caractérisé en ce que**
le matériau présentant des pores fins est fabriqué en précipitant un polymère dans les interstices et, s'il y a lieu, sur la surface du matériau fibreux textile sous forme de couche ou bien en imbibant le matériau fibreux textile sous forme de couche avec une solution, dispersion ou suspension d'un matériau dans un solvant, puis en le retirant du solvant et, s'il y a lieu, en réticulant ou en durcissant le polymère ainsi formé.

4. Laminé selon la revendication 3,
**caractérisé en ce que**
le polymère est choisi parmi les polyesters, polyacrylates, esters cellulosiques, dérivés de l'amidon, copolymères avec acétate de vinyle, polyuréthanes formés à partir de diisocyanate aliphatique ou cycloaliphatique, copolymères contenant des groupes acides ainsi que copolymères sur la base des acides maléiques et/ou acides acryliques ou méthacryliques et copolyméres ou mélanges de ces polymères.

5. Laminé selon l'une quelconque des revendications 1 à 3,
**caractérisé en ce que**
le matériau présentant des pores fins est partiellement ou entièrement un matériau anorganique, notamment un géopolymère ou est fabriqué par durcissement à partir de verre soluble.

6. Laminé selon l'une quelconque des revendications précédentes,
**caractérisé en ce que**
la couche de plâtre présente en outre des particules d'armature en fibres ou en copeaux organiques ou anorganiques.

7. Laminé selon la revendication 6,
**caractérisé en ce que**
les particules d'armature sont en verre, cellulose, lignocellulose ou en un mélange de ces matériaux ou bien qu'elles en contiennent.

8. Procédé pour fabriquer un laminé selon l'une quelconque des revendications 1 à 7,
**caractérisé en ce que**
la couche de plâtre est fabriquée par durcissement d'une pâte de sulfate de calcium imperméabilisée dans la masse et/ou la couche de plâtre est imperméabilisée en surface après le durcissement d'une pâte de sulfate de calcium.

9. Procédé selon la revendication 8,
**caractérisé en ce que**
la pâte de sulfate de calcium est mélangée avant son durcissement avec un imperméabilisant solide, liquide ou émulsionné.

10. Procédé selon la revendication 9,
**caractérisé en ce que**
l'imperméabilisant consiste en tout ou en partie en microcapsules présentant une enveloppe extérieure fusible, solide à température ambiante et remplie d'un imperméabilisant liquide ou d'une poudre fusible mais solide à température ambiante et étant chauffée à la température de fusion pendant ou après le durcissement de l'imperméabilisant.

11. Procédé pour fabriquer un laminé selon l'une quelconque des revendications 1 à 7,
**caractérisé en ce que**
le matériau fibreux textile est rempli avec un matériau formant des pores fins ou présentant des pores fins et, s'il y a lieu, les pores fins sont fabriqués par la suite, puis s'il y a lieu, le matériau fibreux rempli est séché puis mis en contact avec de la pâte de sulfate de calcium ensuite durcie.

12. Procédé pour fabriquer un laminé selon l'une quelconque des revendications 1 à 7,
**caractérisé en ce que**
le matériau fibreux textile est rempli avec un matériau formant des pores fins ou présentant des pores fins et, s'il y a lieu, les pores fins sont fabriqués par la suite et, s'il y a lieu, le matériau fibreux rempli est séché puis rattaché à une couche de plâtre déjà durcie.
